# EUROPEAN PATENT SPECIFICATION

(11) **EP 1 176 799 B1**
(45) Date of publication and mention of the grant of the patent: **19.11.2008**
(21) Application number: 01306096.7
(22) Date of filing: 16.07.2001
(51) Int. Cl.: H04N 1/40

(54) **Method and apparatus for reading images**
Verfahren und Vorrichtung zum Lesen von Bildern
Appareil et procédé de lecture d'images

(30) Priority: 28.07.2000 JP 2000228696
(43) Date of publication of application: 30.01.2002
(73) Proprietor: Ricoh Company, Ltd., Tokyo 143-8555 (JP)
(72) Inventor: Koike, Kazumasa, Ohta-ku, Tokyo 143-8555 (JP)
(74) Representative: Leeming, John Gerard

(56) References cited:
- EP-A- 0 660 598
- EP-A- 0 851 658
- DE-A- 19 712 459
- US-A- 4 775 799
- US-A- 5 285 293
- US-A- 5 489 772
- US-A- 5 764 816

## Description

The present invention relates to an image reading apparatus for reading an original image, a method of controlling the image reading apparatus, and an image processing apparatus for processing an image signal generated by reading an original image.

Generally, in an image reading apparatus for processing image information generated by reading an original image, a resolution at which the original image is read is equal to an intended reading resolution at which an image signal generated by reading the original image is processed.

For example, when an image signal is generated at a reading resolution of 400 dpi (Dots Per Inch: the unit indicating the number of dots per 25.4 mm) using a line image sensor having a resolution of 400 dpi, the image signal is processed by a read image processing unit, at a subsequent stage, capable of processing an image signal at resolution of 400 dpi. The processing unit processes the image signal into a digital image signal of 400 dpi having a desired number of gradation levels, which is eventually outputted.

The image processing applied by the read image processing unit at a subsequent stage may include a variety of calculations involved in shading correction for correcting a light amount distribution of an optical system including a light source, MTF correction for correcting a blurred image caused by the optical system, gamma correction for correcting the brightness of an image, as well as N-value conversion for creating a digital image signal comprised of a number of bits corresponding to the number of output gradation levels, and so on, where N represents the number of output gradation levels.

In recent years, digital scanners and digital copiers tend to be provided with the ability to read an image at a higher resolution for improving the image quality. With this tendency, associated image sensors and read image processing units for processing read image signals, which support higher resolutions, are widely available on the market, so that a part cost has been reduced.

On the other hand, a Group-III facsimile apparatus, which uses an analog public network as a transmission line, has a resolution of 8 dots/mm in a main scanning direction, which corresponds to approximately 200 dpi.

This reading resolution in the main scanning direction is defined in ITU-T Recommendation T.4, so that that resolution in the main scanning direction is fixed at 8 dots/mm for Group-III facsimile apparatuses in order to ensure the availability of communications. Therefore, line image sensors having the resolution of 200 dpi (8 dpm) and associated parts are required for manufacturing Group-III facsimile apparatuses.

However, as described above, the part cost has been reduced in the part supply market due to an increased amount of supplied line image sensors and associated parts which support higher resolutions to such an extent that, even for manufacturing Group-III facsimile apparatuses, selection of a line image sensor supporting a higher resolution could reduce the part cost.

US 5,764,816 discloses an image processing apparatus which has an image processing apparatus which has an image sensor having a resolution of 16 dpm whose output is reduced to 8 dpm, this low resolution image is processed and transmitted, then an output correcting unit raises the resolution again to 16 dpm for printing.

The present invention has been made in view of the actual situation mentioned above, and its aim is to provide an image reading apparatus for reading an original image, which employs a line image sensor supporting a higher resolution but can be adapted to a Group-III facsimile apparatus having a lower resolution, a method of controlling the image reading apparatus, and an image processing apparatus for processing an image signal which is generated by reading an original image using the image reading apparatus.

To achieve the above aim, according to the present invention, there is provided an image reading apparatus as defined in the appended claims.

The analog resolution converting means prunes the high resolution analog read signal at a pruning rate corresponding to a scaling factor.

Specifically, the analog resolution converting means adds the high resolution analog read image signal every unit number of sequential pixels corresponding to a scaling factor to form a single low resolution analog read image signal, and the analog-to-digital converter converts the low resolution analog read image signal input thereto from the analog resolution converting means to a corresponding low resolution digital read image signal based on a reference voltage which is set to a value in accordance with the unit number of sequential pixels.

In one embodiment, the high resolution image sensor includes a plurality of channel outputs, wherein the analog resolution converting means receives the high resolution analog read image signal output from predetermined one or more of the plurality of channels.

The high resolution image sensor and the analog resolution converting means may include high speed circuit components configured to support an operating speed of the high resolution image sensor, and the analog-to-digital converter, video correcting means and image processing means may include low speed circuit components configured to support an operating speed of the low resolution image sensor.

Alternatively, the high resolution image sensor and the analog resolution converting means include high speed circuit components configured to support an operating speed of the high resolution image sensor, and the analog-to-digital converter, video correcting means, digital resolution converting means and image processing means include low speed circuit components configured to support an operating speed of the low resolution image sensor.

Further alternatively, the high resolution image sensor includes a high speed circuit component configured to support an operating speed of the high resolution image sensor, and the low resolution image processing means includes a low speed circuit component configured to support an operating speed of the low resolution image sensor.

Further alternatively, the high resolution image sensor includes a high speed circuit component configured to support an operating speed of the high resolution image sensor, and the analog-to-digital converter, video correcting means, digital resolution converting means and image processing means include low speed circuit components configured to support an operating speed of the low resolution image sensor.

According to another aspect of the present invention there is provided a method of controlling an image reading apparatus as defined in the appended claims.

A more complete appreciation of the present invention and many of the attendant advantages thereof will be readily obtained as the same becomes better understood by reference to the following detailed description when considered in connection with the accompanying drawings, wherein:
Fig. 1 is a block diagram illustrating an exemplary configuration of a Group-III facsimile apparatus according to one embodiment of the present invention;
Fig. 2 is a block diagram illustrating an exemplary image signal processing system for a scanner 6;
Fig. 3 is a signal waveform chart showing an example of an analog image signal output from a line image sensor;
Fig. 4 is a signal waveform chart showing an example of a low resolution analog image signal output from an analog resolution converter;
Fig. 5 is a schematic diagram showing a line image sensor capable of reading the A3 width at resolution of 600 dpi which comprises a plurality of output channels;
Fig. 6 is a block diagram illustrating an exemplary image signal processing system for the scanner 6 which uses a line image sensor capable of reading a the A3 width at resolution of 500 dpi to read an original image having the A4 width;
Fig. 7 is a schematic diagram for explaining a line image sensor capable of reading the A4 width at resolution of 600 dpi, configured to output an odd-numbered pixel column and an even-numbered pixel column through different output channels; and
Fig. 8 is a schematic diagram showing an example of staggered arrangement.

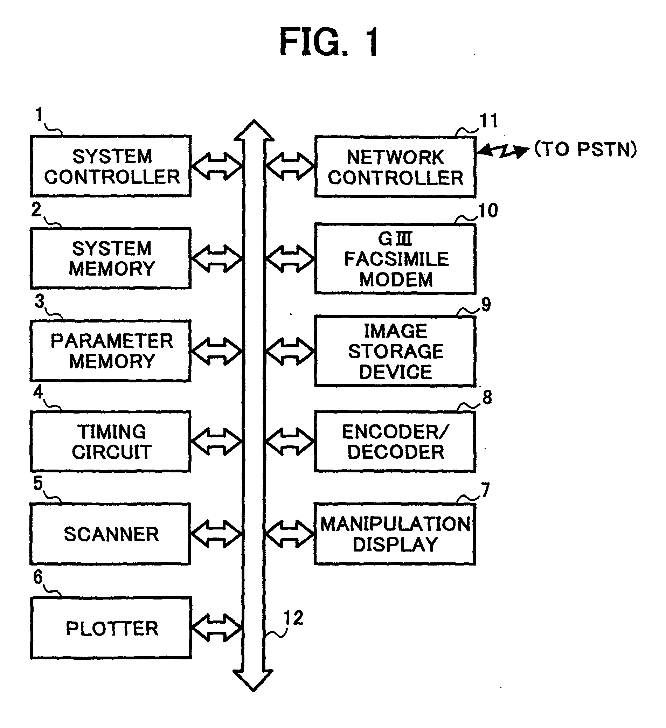

Fig. 1 illustrates a Group-III facsimile apparatus according to one embodiment of the present invention.

Referring specifically to Fig. 1, a system controller 1 controls respective components of the Group-III facsimile apparatus as well as performs processing associated with predetermined Group-III facsimile transmission control. A system memory 2 stores a control processing program executed by the system controller 1, a variety of data required for the system controller 1 to execute the processing program, and so on. The system memory 2 also provides a work area for the system controller 1. A parameter memory 3 stores a variety of information inherent to the Group-III facsimile apparatus, and a timing circuit 4 outputs current time information.

A scanner 5 reads an original image at a predetermined resolution, while a plotter 6 records or outputs an image at a predetermined resolution. A manipulation display 7 comprises a variety of manipulation keys and a variety of indicators which are provided for a user to manipulate the facsimile apparatus.

An encoder/decoder 8 encodes (compresses) an image signal and decodes an encoded (compressed) image signal to an original image signal. An image storage device 9 stores a large number of encoded (compressed) image information.

A Group-III facsimile modem 10, which implements modem functionality of the Group-III facsimile, has a lower speed model function (V.21 modem) for communicating transmission procedure signals, and a higher speed model function (V.17 modem, V.34 modem, V.29 modem, V.27ter Modem, or the like) for mainly communicating image information.

A network controller 11 is provided for connecting the Group-III facsimile apparatus to an analog public network PSTN, and has an automatic initiation/termination function.

These system controller 1, system memory 2, parameter memory 3, timing circuit 4, scanner 5, plotter 6, manipulation display 7, encoder/decoder 8, image storage device 9, Group-III facsimile modem 10, and network controller 11 are interconnected through an internal bus 12 such that communications of data between these components are performed mainly through this internal bus 12.

On the other hand, communications of data are performed directly between the network controller 11 and the Group-III facsimile modem 10.

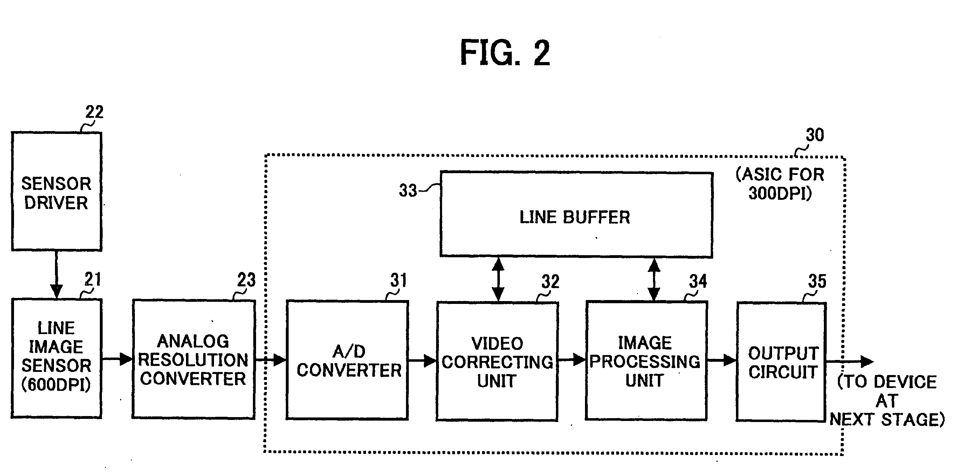

Fig. 2 illustrates an exemplary image signal processing system for the in the scanner 6.

Referring specifically to Fig. 2, a line image sensor 21 has a reading width which covers the width of a A4 sheet (hereinafter called the "A4 width") and is capable of reading an original image line by line at a reading resolution of 600 dpi. A sensor driver 22 drives the line image sensor 21 to perform a reading operation at a predetermined driving period. An analog image sensor output from the line image sensor 21 is applied to an analog resolution converter 23.

The analog resolution converter 23 adds two sequential pixel signals of the analog image signal output from the line image sensor 21 to create a one-pixel signal to prune one pixel from two pixels, thereby converting the analog image signal of 600 dpi output from the line image sensor 21 to an analog image signal of 300 dpi. The output signal is applied to an analog-to-digital (A/D) converter 31 of a lower resolution image processing unit 30.

Here, the lower resolution image processing unit 30 comprises an ASIC (Application Specific Integrated Circuit) device which is capable of directly processing an analog image signal output from a line image sensor capable of reading at 300 dpi. Therefore, the A/D converter 31 is essentially applied with an analog image signal output from a line image sensor at 300 dpi.

In this event, as described above, the A/D converter 31 is applied with the sum of two analog image signals, so that an input signal to the A/D converter 31 has a value twice an intended input value. To accommodate this, a reference voltage for the A/D converter 31 is set at a value twice a normal value to perform an analog division operation so that a digital image signal output from the A/D converter 31 has an appropriate value.

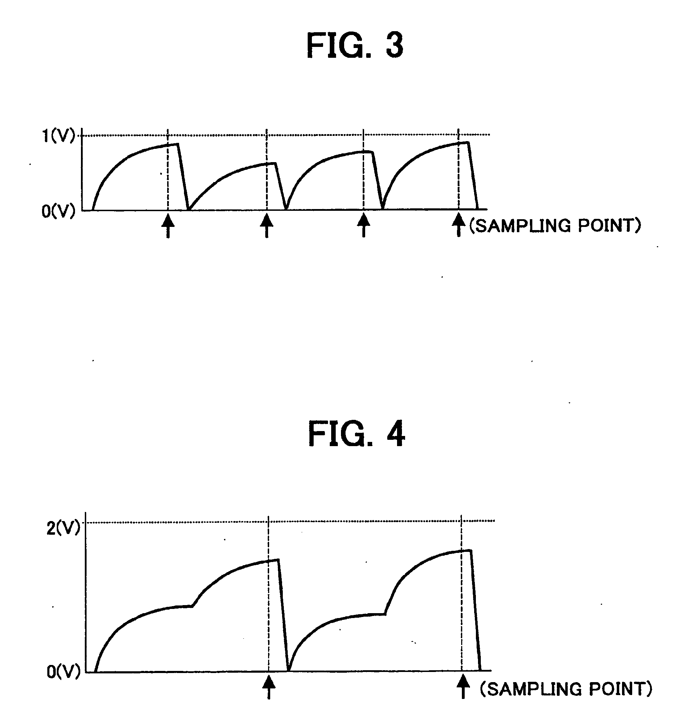

For example, as shown in Fig. 3, the analog image signal output from the line image sensor 21 is sampled at resolution of 600 dpi, and two sequential pixels in the analog signal are added in the analog resolution converter 23 which outputs an analog image signal at a half sampling rate, i.e., at resolution of 300 dpi, as shown in Fig. 4. It should be noted that for this analog addition operation, the analog resolution converter 23 comprises two capacitors for adding charges, and resets charges accumulated on the capacitors every two pixels.

Also, since the analog resolution converter 23 only performs a simple analog addition operation, an analog image signal output from the analog resolution converter 23 has a voltage value twice the original analog image signal. For example, as shown in Fig. 3, assuming that a voltage corresponding to a peak value of the original analog image signal is one (V), a voltage corresponding to a peak value of the analog image signal output from the analog resolution converter 23 is two (V).

As appreciated, the reference voltage corresponding to the positive peak value of the A/D converter 31 is set to two (V) corresponding to the peak value of the input analog image signal, so that the A/D converter 31 outputs a digital image signal which has an appropriate value.

In the manner described above, the A/D converter 31 outputs a digital image signal corresponding to an analog image signal input thereto, and the digital image signal is applied to a video correcting unit 32.

The video correcting unit 32 applies a digital image signal input thereto with a variety of corrections such as shading correction for correcting a light amount distribution of an optical system including a light source, gamma correction for correcting the brightness of an image, and so on. A variety of reference values required for such processing, and intermediate operation results are saved in a line buffer 33. Also, a corrected digital image signal output from the video correcting unit 32 is output to an image processing unit 34.

The image processing unit 34 first converts the resolution of the corrected digital image signal applied thereto from 300 dpi to 200 dpi which is the resolution required by the Group-III facsimile apparatus, and then performs the MTF correction for correcting a blurred image due to the optical system, and N-value conversion for the number of bits in accordance with the number of gradation levels in the output to generate an output digital image signal having a predetermined number of bits. The image processing unit 34 saves reference values required for performing its processing and intermediate operation results in the line buffer 33.

The output digital image signal delivered from the image processing unit 34 is output to a device at a subsequent stage through an output circuit 35. In this event, the subsequent device may be the encoder/decoder 8 to which the digital image signal is output through the internal bus 12 for image information transmission, and the plotter 6 to which the digital image signal is output through the internal bus 12 for a copying operation.

As described above, since this embodiment employs the line image sensor 21 capable of reading at resolution of 600 dpi which can be readily procured currently in the part market and is low in part cost, the cost involved in manufacturing the apparatus can be reduced.

The lower resolution image processing unit 30 is only required to have the ability to process an analog image signal of 300 dpi. For example, assuming that a pixel clock rate of 10 MHz is required for processing an analog image signal of 600 dpi, the lower resolution image processing unit 30 needs a pixel clock rate of 5 MHz. As appreciated, circuit components for lower speed can be employed for constructing the lower resolution image processing unit 30, thereby making it possible to reduce the cost of the apparatus.

Also, the circuit scale required for the resolution of 300 dpi will suffice for the buffer memory 33 and so on in the lower resolution image processing unit 30, so that a significant reduction in cost can be realized as compared with the circuit scale required for processing a digital image signal of 600 dpi.

In addition, since an analog image signal of 600 dpi is once converted to 300 dpi in the analog resolution converter 23, and then converted to a digital image signal of 200 dpi, it is possible to significantly reduce the circuit scale required to form a digital image signal at an eventually desired resolution. Also, since a conversion to an arbitrary resolution can be accomplished in a two-stage process involving the resolution conversion in the analog resolution converter 23 and the digital resolution conversion, a high degree of freedom is provided for the resolution conversion.

At present, line image sensors capable of reading a width of A3 size at resolution of 600 dpi have been brought into practical use, so that in some cases, such a line image sensor may have to be taken into consideration.

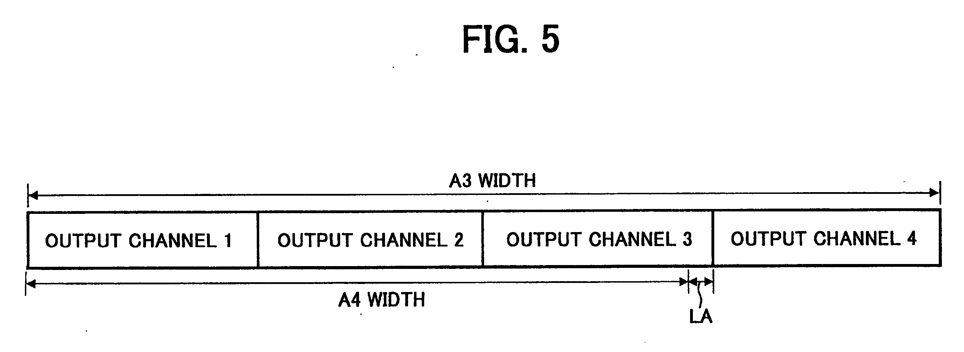

As shown in Fig. 5, for example, the foregoing line image sensor has its reading pixel sequence divided into four regions in the main scanning direction, and a read image signal in each of the divided regions is output through a different output channel 1 - 4.

The reading width required for the Group-III facsimile apparatus is the A4 width which corresponds to three quarters of the A3 width, as shown in Fig. 5 (shorter by 12 mm (=LA) than A3), so that the first tree of the four divided output channels may be used as a line image sensor for reading the A4 width.

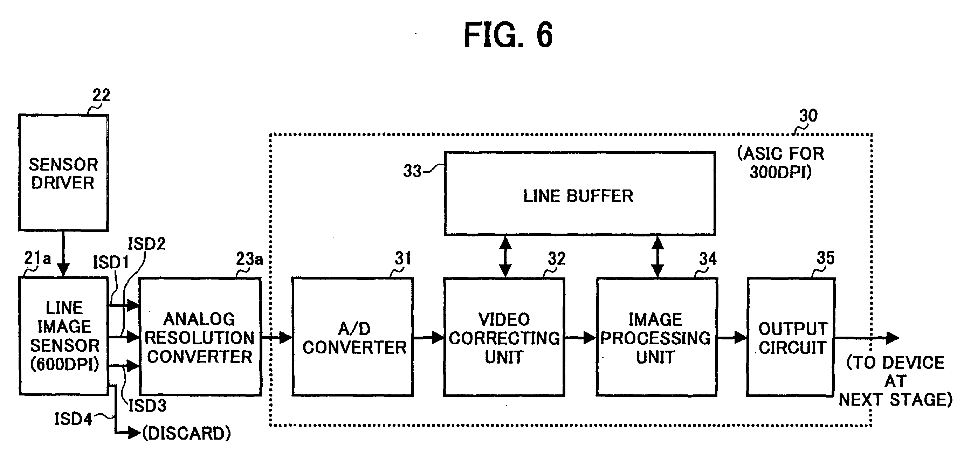

Fig. 6 illustrates an image signal processing system for the scanner 6 for reading the A4 width using a line image sensor capable of reading the A3 width at resolution of 600 dpi, wherein parts identical to or corresponding to those in Fig. 2 are designated the same reference numerals.

Referring specifically to Fig. 6, a line image sensor 21a capable of reading the A3 width, similar to the line image sensor shown in Fig. 5, reads an original image line by line at a reading resolution of 600 dpi. Also, the line image sensor 21a has a reading region divided into four in the main scanning directions, so that analog image signals of the respective divided regions are output through different output channels ISD1, ISD2, ISD3, ISD4, respectively. A sensor driver 22 drives the line image sensor 21a to perform a reading operation at a predetermined driving period. Out of the analog image signals output from the line image sensor 21a, those signals output through the output channels ISD1, ISD2, ISD3 are applied to an analog resolution converter 23, while the signal output through the output channel ISD4 is discarded.

Also, in this event, a portion of an analog image signal corresponding to the last 12 mm of the third output channel ISD3 falls under a region outside of the A4 reading width, so that this portion of the analog signal can be discarded.

The analog resolution converter 23 converts the analog image signal of 600 dpi output from the line image sensor 21a to an analog image signal of 300 dpi through a pruning operation which involves adding two sequential pixels in the respective analog image signals output through the output channels ISD1, ISD2, ISD3 of the line image sensor 21a. The output signal of the analog resolution converter 23 is applied to an A/D converter 31 in a lower resolution image processing unit 30.

Here, the lower resolution image processing unit 30 comprises an ASIC device which is capable of directly processing an analog image signal of 300 dpi output from a line image sensor. Therefore, the A/D converter 31 is essentially applied with an analog image signal of 300 dpi output from a line image sensor.

In this event, as described above, the A/D converter 31 is applied with the sum of two analog image signals, so that an input signal to the A/D converter 31 has a value twice an intended input value. To accommodate this, a reference voltage for the A/D converter 31 is set at a value twice a normal value to perform an analog division operation so that a digital image signal output from the A/D converter has an appropriate value.

For example, as shown in Fig. 3, the analog image signal output from the line image sensor 21 is sampled at resolution of 600 dpi, and two sequential pixels in the analog signal are added in the analog resolution converter 23 which outputs an analog image signal at a half sampling rate, i.e., at resolution of 300 dpi, as shown in Fig. 4. It should be noted that for this analog addition operation, the analog resolution converter 23 comprises two capacitors for adding charges, and resets charges accumulated on the capacitors every two pixels.

Also, since the analog resolution converter 23 only performs a simple analog addition operation, an analog image signal output from the analog resolution converter 23 has a voltage value twice the original analog image signal. For example, as shown in Fig. 3, assuming that a voltage corresponding to a peak value of the original analog image signal is one (V), a voltage corresponding to a peak value of the analog image signal output from the analog resolution converter 23 is two (V).

As appreciated, the reference voltage corresponding to the positive peak value of the A/D converter 31 is set to two (V) corresponding to the peak value of the input analog image signal, so that the A/D converter 31 outputs a digital image signal which has an appropriate value.

In the manner described above, the A/D converter 31 outputs a digital image signal corresponding to an analog image signal input thereto, and the digital image signal is applied to a video correcting unit 32.

The video correcting unit 32 applies a digital image signal input thereto with a variety of corrections such as shading correction for correcting a light amount distribution of an optical system including a light source, gamma correction for correcting the brightness of an image, and so on. A variety of reference values required for such processing, and intermediate operation results are saved in a line buffer 33. Also, a corrected digital image signal output from the video correcting unit 32 is output to an image processing unit 34.

The image processing unit 34 first converts the resolution of the corrected digital image signal applied thereto from 300 dpi to 200 dpi which is the resolution required by the Group-III facsimile apparatus, and then performs the MTF correction for correcting a blurred image due to the optical system, and N-value conversion for the number of bits in accordance with the number of gradation levels in the output to generate an output digital image signal having a predetermined number of bits. The image processing unit 34 saves reference values required for performing its processing and intermediate operation results in the line buffer 33.

The output digital image signal delivered from the image processing unit 34 is output to a device at a subsequent stage through an output circuit 35. In this event, the subsequent device may be the encoder/decoder 8 to which the digital image signal is output through the internal bus 12 for a copying operation.

As described above, since this embodiment can create an image signal corresponding to that generated by reading an original image of A4 width at resolution of 200 dpi, using a line image sensor capable of reading the A3 width at resolution of 600 dpi, the part cost can be reduced. Also, since the same line image sensor can be used for apparatuses capable of reading an original image of A3 width and an original image of A4 width, the procurement of parts can be further facilitated.

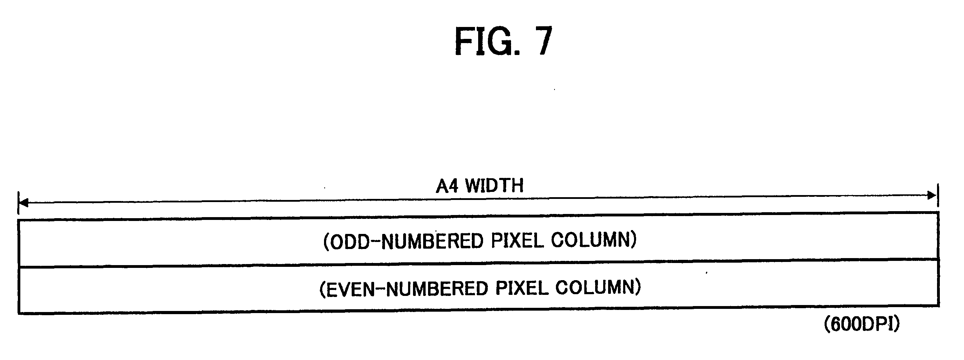

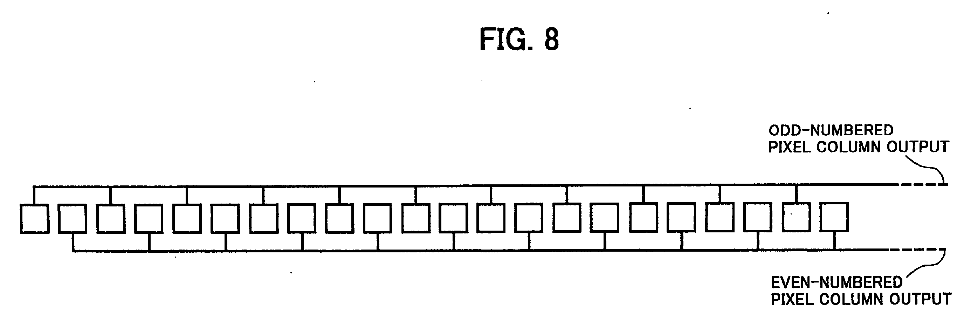

It should be noted that some line image sensors having a reading resolution of 600 dpi are configured to output signals from an odd-numbered pixel column and an even-numbered pixel column through different output channels, as shown in Fig. 7. Also, in this event, within light receiving cells corresponding to read pixels arranged in a line, an odd-numbered pixel column and an even-numbered pixel column are output through separate output channels, as shown in Fig. 8.

In such a configuration, only the output channel associated with the odd-numbered pixel column or the even-numbered pixel column may be selected to provide a read image signal corresponding to 300 dpi.

This invention may be conveniently implemented using a conventional general purpose digital computer programmed according to the teaching of the present specification, as will be apparent to those skilled in the computer art. Appropriate software coding can readily be prepared by skilled programmers based on the teachings of the present disclosure, as will be apparent to those skilled in the software art. The present invention may also be implemented by the preparation of application specific integrated circuits or by interconnecting an appropriate network of conventional component circuits, as will be readily apparent to those skilled in the art.

## Claims

1. An image reading apparatus (5) for reading an original image, comprising:
a high resolution image sensor (21) for reading an image at a first resolution to input a read image signal;
an analog-to-digital converter (31) adapted to convert a low resolution analog read image signal output from a low resolution image sensor for reading an image at a second resolution lower than the first resolution, to a corresponding low resolution digital read image signal;
video correcting means (32) for applying a predetermined correcting operation to the low resolution digital read image signal output from said analog-to-digital converter (31); and
analog resolution converting means (23) for converting the high resolution analog read image signal output from said high resolution image sensor to a low resolution analog read image signal of the second resolution,
wherein the low resolution analog read image signal of the second resolution output from said analog resolution converting means is input to said analog-to-digital converter (31); **characterised by**:
image processing means (34) for applying predetermined image processing to a corrected low resolution digital read image signal output from said video correcting means; and in that
said analog resolution converting means (23) adds the high resolution analog read image signal every unit number of sequential pixels corresponding to a scaling factor to form a single low resolution analog read image signal; and
said analog-to-digital converter (31) converts the low resolution analog read image signal input thereto from said analog resolution converting means to a corresponding low resolution digital read image signal based on a reference voltage which is set to a value in accordance with the unit number of sequential pixels:

2. An image reading apparatus (5) according to claim 1 further comprising:
digital resolution converting means (34) for converting a corrected low resolution digital read image signal output from said video correcting means to a low resolution digital read image signal of a third resolution lower than the second resolution; and wherein
said image processing means (34) is adapted to apply the predetermined image processing to the low resolution digital read image signal of the third resolution output from said digital resolution converting means.

3. An image reading apparatus according to claim 1 or 2, wherein:
said analog resolution converting means (23) prunes the high resolution analog read signal at a pruning rate corresponding to a scaling factor.

4. An image reading apparatus according to any one of claims 1 to 3,
**characterized in that**:
said high resolution image sensor (21 a) comprises a plurality of channel outputs (ISD1 - ISD4), wherein said analog resolution converting means (23a) receives the high resolution analog read image signal output from a predetermined one or more of the plurality of channels.

5. An image reading apparatus according to any one of claims 1 to 4, wherein:
said high resolution image sensor (21) and said analog resolution converting means (23) comprise high speed circuit components configured to support an operating speed of said high resolution image sensor; and
said analog-to-digital converter (31), said video correcting means (32) and said image processing means (34) comprise low speed circuit components configured to support an operating speed of said low resolution image sensor.

6. A method of controlling an image reading apparatus (5) for reading an original image, said image reading apparatus comprising a high resolution image sensor (21) for reading an image at a first resolution to input a read image signal, said method comprising the steps of:
converting a high resolution analog read image signal of the first resolution output from said high resolution image sensor to a low resolution analog read image signal of a second resolution lower than the first resolution;
analog-to-digital converting the low resolution analog read image signal of the second resolution to a corresponding low resolution digital read image signal;
applying a predetermined digital correcting operation to the low resolution digital read image signal to form a corrected low resolution digital read image signal;
**characterised by**:
applying predetermined image processing to the corrected low resolution digital read image signal; and in that
converting the high resolution analog read signal to a low resolution analog read signal is performed by adding the high resolution analog read image signal every unit number of sequential pixels corresponding to a scaling factor; and
analog-to-digital converting the low resolution analog read image signal is based on a reference voltage which is set to a value in accordance with the unit member of sequential pixels.

7. A method according to claim 6 further comprising:
converting the corrected low resolution digital read image signal to a low resolution digital read image signal of a third resolution lower than the second resolution; and wherein
the predetermines image processing is applied to the low resolution digital read image signal of the third resolution.

8. An image processing apparatus comprising an image reading apparatus according to any one of claims 1 to 5.

## Patentansprüche

1. Bildlesevorrichtung (5) zum Lesen eines Originalbildes, die aufweist:
einen Bildsensor (21) mit hoher Auflösung, um ein Bild mit einer ersten Auflösung zu lesen, um ein Bildlesesignal einzugeben;
einen Analog-zu-Digital-Wandler (31), der angepasst ist, um ein analoges Bildlesesignal niedriger Auflösung, das von einem Bildsensor mit niedriger Auflösung ausgegeben wird, um ein Bild bei einer zweiten Auflösung zu lesen, die niedriger als die erste Auflösung ist, in ein entsprechendes digitales Bildlesesignal mit niedriger Auflösung zu wandeln;
eine Videokorrektureinrichtung (32), um eine vorbestimmte Korrekturoperation auf das digitale Bildlesesignal mit niedriger Auflösung anzuwenden, das von dem Analog-zu-Digital-Wandler (31) ausgegeben worden ist; und
eine analoge Auflösungswandeleinrichtung (23), um das analoge Bildlesesignal mit hoher Auflösung, das von dem Bildsensor mit hoher Auflösung ausgegeben worden ist, in ein analoges Bildlesesignal mit niedriger Auflösung mit der zweiten Auflösung zu konvertieren,
wobei das analoge Bildlesesignal mit niedriger Auflösung mit der zweiten Auflösung, das von der analogen Auflösungswandeleinrichtung ausgegeben wird, in den Analog-zu-Digital-Konverter (31) eingegeben wird; **gekennzeichnet durch**:
Bildverarbeitungsmittel (34), um eine vorbestimmte Bildverarbeitung auf ein korrigiertes digitales Bildlesesignal mit niedriger Auflösung, das von der Videokorrektureinrichtung ausgegeben worden ist, anzuwenden; und **dadurch**, dass
die analoge Auflösungswandeleinrichtung (23) das analoge Bildlesesignal mit hoher Auflösung jede Einheitsanzahl von sequentiellen Bildelementen bzw. Pixeln entsprechend zu einem Skalierungsfaktor hinzuaddiert, um ein einziges analoges Bildlesesignal mit niedriger Auflösung zu bilden; und
der Analog-zu-Digital-Wandler (31) konvertiert das analoge Bildlesesignal mit niedriger Auflösung, das in diesen von der analogen Auflösungswandeleinrichtung eingegeben worden ist, in ein entsprechendes digitales Bildlesesignal mit niedriger Auflösung auf der Grundlage einer Referenzspannung, die auf einen Wert gemäß der Einheitsanzahl von sequentiellen Bildelementen bzw. Pixeln eingestellt ist.

2. Bildlesevorrichtung (5) nach Anspruch 1, die ferner aufweist:
eine digitale Auflösungswandeleinrichtung (34), um ein korrigiertes digitales Bildlesesignal mit niedriger Auflösung, das von der Videokorrektureinrichtung ausgegeben worden ist, in ein digitales Bildlesesignal mit niedriger Auflösung einer dritten Auflösung umzuwandeln, die niedriger als die zweite Auflösung ist; und wobei
die Bildverarbeitungseinrichtung (34) angepasst ist, um die vorbestimmte Bildverarbeitung auf ein digitales Bildlesesignal mit niedriger Auflösung der dritten Auflösung, die von der digitalen Auflösungswandeleinrichtung ausgegeben worden ist, anzuwenden.

3. Bildlesevorrichtung nach einem der Ansprüche 1 oder 2, wobei:
die analoge Auflösungswandeleinrichtung (23) das analoge Lesesignal mit hoher Auflösung mit einer Verkürzungs- bzw. Ausdünnungsrate gemäß einem Skalierungsfaktor verkürzt bzw. ausdünnt.

4. Bildlesevorrichtung gemäß irgendeinem der Ansprüche 1 bis 3, **dadurch gekennzeichnet, dass**:
der Bildsensor (21a) mit hoher Auflösung mehrere Ausgangskanäle (ISD1 - ISD4) aufweist, wobei die analoge Auflösungswandeleinrichtung (23a) ein analoges Bildlesesignal mit hoher Auflösung, das von einem oder mehreren vorbestimmten der mehreren Kanäle ausgegeben wird, empfängt.

5. Bildlesevorrichtung nach irgendeinem der Ansprüche 1 bis 4, wobei:
der Bildsensor (21) mit hoher Auflösung und die analoge Auflösungswandeleinrichtung (23) Schaltungsbestandteile mit hoher Geschwindigkeit aufweist, die konfiguriert sind, um eine Betriebsgeschwindigkeit des Bildsensors mit hoher Auflösung zu unterstützen; und
der Analog-zu-Digital-Wandler (31), die Videokorrektureinrichtung (32) und die Bildverarbeitungsmittel (34) Schaltungskomponenten mit niedriger Geschwindigkeit aufweisen, die konfiguriert sind, um eine Betriebsgeschwindigkeit des Bildsensors mit niedriger Auflösung zu unterstützen.

6. Verfahren zum Steuern einer Bildleseeinrichtung (5), um ein Originalbild zu lesen, wobei die Bildlesevorrichtung einen Bildsensor (21) mit hoher Auflösung zum Lesen eines Bildes bei einer ersten Auflösung aufweist, um ein gelesenes Bildsignal einzugeben, wobei das Verfahren die Schritte aufweist:
ein analoges Bildlesesignal mit hoher Auflösung der ersten Auflösung, das von dem Bildsensor mit hoher Auflösung ausgegeben wird, wird in ein analoges Bildlesesignal niedriger Auflösung mit einer zweiten Auflösung, die niedriger als die erste Auflösung ist, gewandelt;
das analoge Bildlesesignal mit niedriger Auflösung der zweiten Auflösung wird zu einem entsprechenden digitalen Bildlesesignal niedriger Auflösung analog-zu-digitalgewandelt;
eine vorbestimmte digitale Korrekturoperation wird auf das digitale Bildlesesignal mit niedriger Auflösung angewandt, um ein korrigiertes digitales Bildlesesignal niedriger Auflösung auszubilden;
**gekennzeichnet durch**:
eine vorbestimmte Bildverarbeitung wird auf das korrigierte digitale Bildlesesignal mit niedriger Auflösung angewandt; und **dadurch**, dass
das Wandeln des analogen Lesesignals mit hoher Auflösung in ein analoges Lesesignal niedriger Auflösung durchgeführt wird, indem dem analogen Bildlesesignal mit hoher Auflösung jede Einheitsanzahl von aufeinanderfolgenden Bildelementen bzw. Pixeln gemäß einem Skalierungsfaktor hinzugefügt wird; und
eine Analog-zu-Digital-Wandlung des analogen Bildlesesignals mit niedriger Auflösung basiert auf einer Bezugsspannung, die auf einen Wert gemäß der Einheitsanzahl bzw. dem Einheitsmitglied der sequentiellen Bildelemente bzw. Pixel eingestellt wird.

7. Verfahren nach Anspruch 6, das ferner aufweist:
das korrigierte digitale Bildlesesignal mit niedriger Auflösung wird in ein digitales Bildlesesignal mit niedriger Auflösung einer dritten Auflösung, die niedriger als die zweite Auflösung ist, gewandelt; und wobei
die vorbestimmte Bildverarbeitung auf das digitale Bildlesesignal niedriger Auflösung mit der dritten Auflösung angewandt wird.

8. Bildverarbeitungsvorrichtung, die eine Bildlesevorrichtung nach einem der Ansprüche 1 bis 5 aufweist.

## Revendications

1. Appareil de lecture d'image (5) pour lire une image originale, comprenant :
un capteur d'image haute résolution (21) pour lire une image à une première résolution afin d'entrer un signal d'image lue ;
un convertisseur analogique-numérique (31) adapté pour convertir un signal d'image lue analogique de faible résolution émis en sortie depuis un capteur d'image de faible résolution pour lire une image à une seconde résolution inférieure à la première résolution, selon un signal d'image lue numérique de faible résolution correspondant ;
un moyen de correction vidéo (32) pour appliquer une opération de correction prédéterminée au signal d'image lue numérique de faible résolution qui est émis en sortie depuis ledit convertisseur analogique-numérique (31) ; et
un moyen de conversion de résolution analogique (23) pour convertir le signal d'image lue analogique haute résolution qui est émis en sortie depuis ledit capteur d'image haute résolution selon un signal d'image lue analogique de faible résolution de la seconde résolution,
dans lequel le signal d'image lue analogique de faible résolution de la seconde résolution qui est émis en sortie depuis ledit moyen de conversion de résolution analogique est entré sur ledit convertisseur analogique-numérique (31); **caractérisé par** :
un moyen de traitement d'image (34) pour appliquer un traitement d'image prédéterminé à un signal d'image lue numérique de faible résolution corrigé qui est émis en sortie depuis ledit moyen de correction vidéo ; et en ce que :
ledit moyen de conversion de résolution analogique (23) additionne le signal d'image lue analogique haute résolution à chaque nombre unitaire de pixels séquentiels correspondant à un facteur de mise à l'échelle afin de former un unique signal d'image lue analogique de faible résolution ; et
ledit convertisseur analogique-numérique (31) convertit le signal d'image lue analogique de faible résolution entré dessus depuis ledit moyen de conversion de résolution analogique selon un signal d'image lue numérique de faible résolution correspondant sur la base d'une tension de référence établie à une valeur conformément au nombre unitaire de pixels séquentiels.

2. Appareil de lecture d'image (5) selon la revendication 1, comprenant en outre :
un moyen de conversion de résolution numérique (34) pour convertir un signal d'image lue numérique de faible résolution corrigé qui est émis en sortie depuis ledit moyen de correction vidéo selon un signal d'image lue numérique de faible résolution d'une troisième résolution qui est inférieure à la seconde résolution ; et dans lequel :
ledit moyen de traitement d'image (34) est adapté pour appliquer le traitement d'image prédéterminé au signal d'image lue numérique de faible résolution de la troisième résolution qui est émis en sortie depuis ledit moyen de conversion de résolution numérique.

3. Appareil de lecture d'image (5) selon la revendication 1 ou 2, dans lequel :
ledit moyen de conversion de résolution analogique (23) élague le signal lue analogique haute résolution selon un taux d'élagage correspondant à un facteur de mise à l'échelle.

4. Appareil de lecture d'image (5) selon l'une quelconque des revendications 1 à 3, **caractérisé en ce que** :
ledit capteur d'image haute résolution (21 a) comprend une pluralité de sorties de canal (ISD1-ISD4), dans lequel ledit moyen de conversion de résolution analogique (23a) reçoit le signal d'image lue analogique haute résolution qui est émis en sortie depuis un ou plusieurs canaux prédéterminés de la pluralité de canaux.

5. Appareil de lecture d'image (5) selon l'une quelconque des revendications 1 à 4, dans lequel :
ledit capteur d'image haute résolution (21) et ledit moyen de conversion de résolution analogique (23) sont constitués de composants de circuit haute vitesse configurés pour supporter une vitesse de fonctionnement dudit capteur d'image haute résolution ; et
ledit convertisseur analogique-numérique (31), ledit moyen de correction vidéo (32) et ledit moyen de traitement d'image (34) sont constitués de composants de circuit faible vitesse configurés pour supporter une vitesse de fonctionnement dudit capteur d'image de faible résolution.

6. Procédé de commande d'un appareil de lecture d'image (5) pour lire une image originale, ledit appareil de lecture d'image comprenant un capteur d'image haute résolution (21) pour lire une image à une première résolution afin d'entrer un signal d'image lue, ledit procédé comprenant les étapes de :
conversion d'un signal d'image lue analogique haute résolution de la première résolution qui est émis en sortie depuis ledit capteur d'image haute résolution selon un signal d'image lue analogique de faible résolution d'une seconde résolution qui est inférieure à la première résolution ;
conversion analogique-numérique du signal d'image lue analogique de faible résolution de la seconde résolution selon un signal d'image lue numérique de faible résolution correspondant ;
application d'une opération de correction numérique prédéterminée sur le signal d'image lue numérique de faible résolution de manière à former un signal d'image lue numérique de faible résolution corrigé ;
**caractérisé par** :
l'application d'un traitement d'image prédéterminé sur le signal d'image lue numérique de faible résolution corrigé ; et en ce que
la conversion du signal d'image lue analogique haute résolution selon un signal d'image lue analogique de faible résolution est réalisée en additionnant le signal d'image lue analogique haute résolution à chaque nombre unitaire de pixels séquentiels correspondant à un facteur de mise à l'échelle ; et
la conversion analogique-numérique du signal d'image lue analogique de faible résolution est basée sur une tension de référence établie à une valeur conformément au nombre unitaire de pixels séquentiels.

7. Procédé selon la revendication 6, comprenant en outre :
la conversion du signal d'image lue numérique de faible résolution corrigée selon un signal d'image lue numérique de faible résolution d'une troisième résolution inférieure à la seconde résolution ; et dans lequel
le traitement d'image prédéterminé est appliqué au signal d'image lue numérique de faible résolution de la troisième résolution.

8. Appareil de traitement d'image comprenant un appareil de lecture d'image selon l'une quelconque des revendications 1 à 5.
